# FASCICULE DE BREVET EUROPEEN

(11) **EP 1 565 367 B1**
(45) Date de publication et mention de la délivrance du brevet: **09.01.2013**
(21) Numéro de dépôt: 03782199.8
(22) Date de dépôt: 14.11.2003
(51) Int. Cl.: B60T 13/46

(54) **PROCEDE DE REGLAGE D UN DISPOSITIF DE FREINAGE**
VERFAHREN ZUR EINSTELLUNG EINES BREMSSYSTEMS
BRAKING DEVICE ADJUSTMENT METHOD

(30) Priorité: 22.11.2002 FR 0214783
(43) Date de publication de la demande: 24.08.2005
(73) Titulaire: BOSCH SISTEMAS DE FRENADO, S.L., 08080 Barcelona 6 (ES)
(72) Inventeur: BERTHOMIEU, Bruno, 08013 BARCELONE (FR); SACRISTAN, Fernando, 08348 BARCELONE (ES); SIMON BACARDIT, Juan, 08013 BARCELONE (ES); TOMAS, Leon, 08917 MONTIGALA-BADALONA (ES)
(74) Mandataire: Hurwic, Aleksander Wiktor
(86) Numéro de dépôt international: PCT/EP2003/012753
(87) Numéro de publication internationale: WO 2004/048177

(56) Documents cités:
- GB-A- 2 156 930
- US-A- 4 400 942
- US-A- 4 815 293
- US-A- 4 843 948
- US-A- 4 892 027
- US-A- 5 761 983

## Description

L'invention concerne un procédé de réglage de la course morte d'un ensemble maître-cylindre et servomoteur d'assistance pneumatique dans un dispositif de freinage, en particulier pour véhicule automobile.

Il est connu, par exemple de GB 2 156 930 et US 4 400 942, d'assembler un maître-cylindre avec un servomoteur pneumatique d'assistance au freinage.

Le servomoteur d'assistance pneumatique d'un circuit de freinage comprend une enveloppe rigide dans laquelle deux chambres sont délimitées et séparées l'une de l'autre par une cloison mobile portant un piston axial, l'une de ces chambres étant reliée à une source de dépression et l'autre étant sélectivement mise en communication avec la première chambre ou avec l'atmosphère environnante.

Le piston est interposé entre une tige de commande déplacée en translation axiale dans le servomoteur par la pédale de frein, et une tige de poussée agissant sur un piston du maître-cylindre pour le déplacer dans une chambre du maître-cylindre quand la tige de commande est elle-même déplacée par la pédale de frein, et faire monter la pression en sortie du maître-cylindre.

Il existe, dans le système maître-cylindre et servomoteur, des courses mortes qu'il importe de réduire et de contrôler, de façon à ce qu'une action sur la pédale de frein du véhicule provoque aussi rapidement que possible le serrage des freins. A cet effet, la tige de poussée qui est montée dans le servomoteur entre le piston du servomoteur et le piston du maître-cylindre, est souvent réalisée en deux parties télescopiques et/ou vissées l'une au bout de l'autre de façon à ce que, dans chaque ensemble maître-cylindre et servomoteur, la course morte puisse être réglée à une valeur appropriée par modification de la longueur de la tige de poussée.

Ce réglage nécessite donc un vissage ou un dévissage précis des deux parties de la tige de poussée, le serrage d'un organe de verrouillage et éventuellement l'utilisation de cales ou de rondelles d'épaisseurs différentes. Ces opérations de réglage sont relativement fastidieuses et longues et donc coûteuses.

L'invention a notamment pour but de simplifier ces opérations et d'en réduire le coût.

A cet effet l'invention a pour objet un procédé de réglage de course morte revendiqué dans les revendications 1 à 7, un dispositif de mise en oeuvre du procédé tel que revendiqué dans les revendications **8 et 9** et un ensemble maître-cylindre et servomoteur tel que revendiqué dans les revendications **10** et **11**.

Le procédé selon l'invention évite donc toute opération de vissage-dévissage et de serrage d'un organe de verrouillage et présente de plus l'avantage que la tige de poussée est mise à la longueur voulue, de façon précise et en une seule opération de compression, sans risque ultérieur de déréglage.

Le réglage d'une course morte souhaitée dans un ensemble maître-cylindre-servomoteur est ainsi plus simple et moins coûteux que dans la technique antérieure.

La détermination de la longueur à donner à la tige de poussée est donc très simple et rapide.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- la figure 1 est une vue schématique en coupe axiale d'un servomoteur d'assistance pneumatique ;
- la figure 2 est une vue schématique en coupe axiale d'un dispositif de réglage de la longueur de la tige de poussée ;
- les figures 3 à 8 sont des vues schématiques en coupe axiale de différentes formes de réalisation d'une tige de poussée.

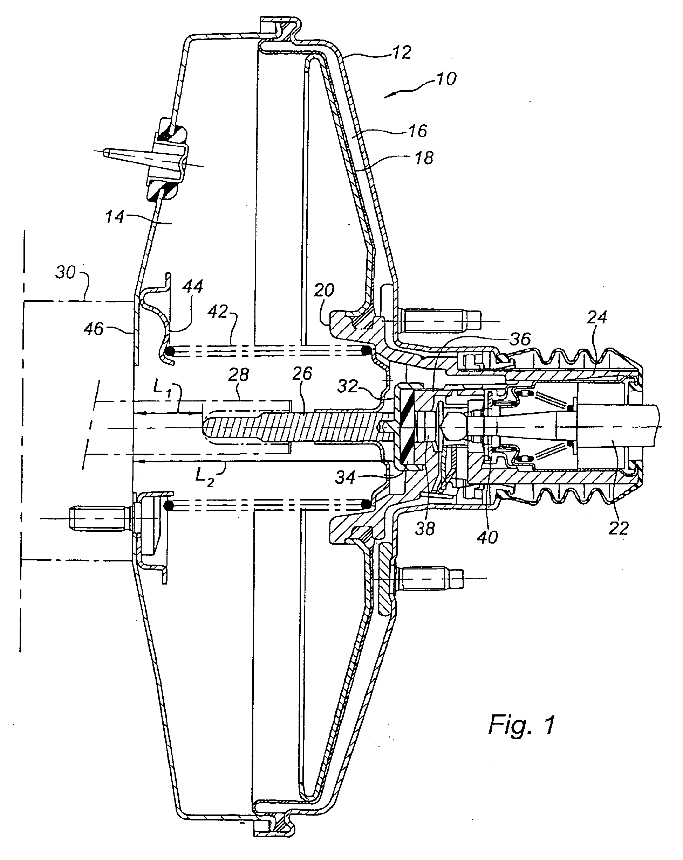

Dans la description qui suit, tout ce qui est représenté à gauche dans les figures 1 et 3 à 8 sera décrit comme étant à l'avant, et tout ce qui représenté à droite sera décrit comme étant à l'arrière.

Le servomoteur d'assistance pneumatique 10 pour dispositif de freinage représenté schématiquement en figure 1, comprend essentiellement une enveloppe rigide 12 dans laquelle une chambre avant 14 et une chambre arrière 16 sont séparées de façon étanche l'une de l'autre par une cloison mobile 18 qui porte un piston axial 20.

La chambre avant 14 est destinée à être reliée à une source de dépression tandis que la chambre arrière 16 est sélectivement mise en communication avec la chambre avant 14 en l'absence de freinage et avec l'atmosphère ambiante lors d'un freinage.

Le piston axial 20 du servomoteur est interposé entre une tige de commande 22 déplacée axialement à l'intérieur d'une partie tubulaire arrière 24 du piston 20 par une pédale de frein non représentée, et une tige de poussée 26 qui s'étend axialement vers l'avant et qui coopère avec un piston 28 d'un maître-cylindre représenté en traits fantôme, la tige de poussée 26 étant emmanchée à son extrémité arrière sur une cuvette 32 portant un disque de réaction 34 en un matériau sensiblement incompressible tel par exemple que du caoutchouc ou un élastomère, sur lequel s'appuient une partie avant 36 du piston 20 et un plongeur 38 monté à l'extrémité avant de la tige de commande 22. L'extrémité arrière du plongeur 38 coopère avec un clapet annulaire 40 d'une vanne à 3 voies montée dans la partie tubulaire arrière 24 du piston et permettant, en fonction de la position axiale de la tige de commande 22 actionnée par la pédale de frein, de relier la chambre arrière 16 sélectivement à la chambre avant 14 ou à l'atmosphère ambiante, d'une façon bien connue de l'homme du métier.

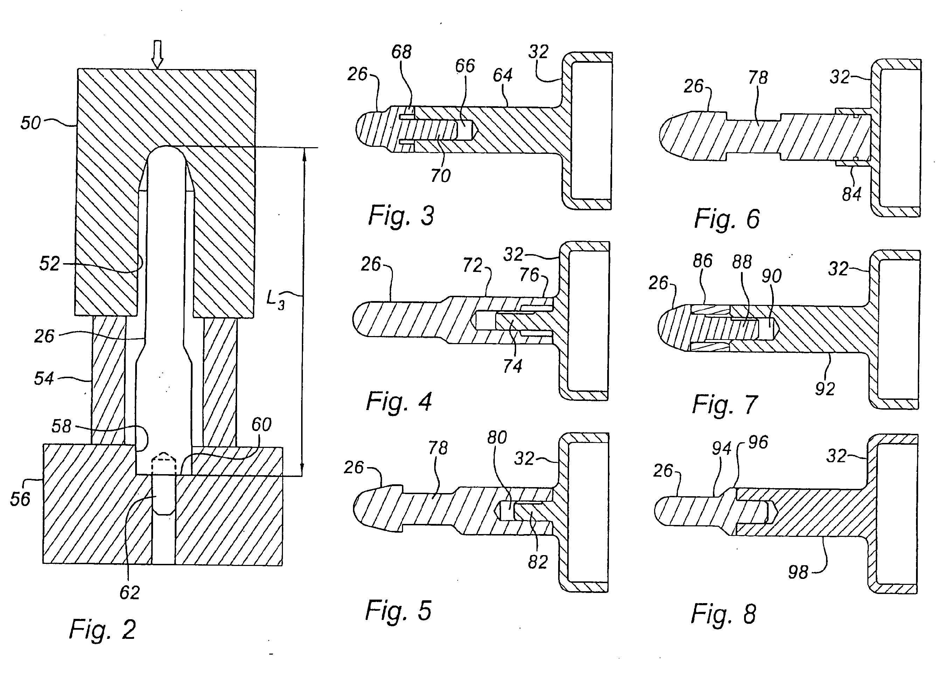

Le piston 20 du servomoteur est rappelé en permanence dans sa position de repos représentée en figure 2, où il est en butée sur une partie fixe de l'enveloppe 12, par un ressort de rappel 42 monté axialement dans la chambre avant 14 entre le piston 20 et un siège 44 solidaire de la paroi avant 46 de l'enveloppe 12 du servomoteur.

Pour le réglage de la course morte de l'ensemble servomoteur 10 et maître cylindre 30, on peut ajuster la longueur de la tige de poussée 26 emmanchée sur la cuvette 32 de façon à ce que son extrémité avant soit à une distance L1 de la face extérieure de la paroi radiale avant 46 de l'enveloppe du servomoteur, sur laquelle est monté le maître-cylindre 30 comme représenté en figure 1.

Pour le réglage de la longueur de la tige de poussée 26, on mesure la longueur L2 entre la face avant de la cuvette 32 et la face extérieure de la paroi radiale avant 46 et on donne à la tige de poussée 26 la longueur L3 = L2 - L1.

Pour cela, la tige de poussée 26 comprend au moins une partie dont les caractéristiques de forme et/ou de matière facilitent sa déformation plastique par compression axiale.

Le dispositif de compression selon l'invention comprend (figure 2) une pièce de butée supérieure 50 comportant un passage axial cylindrique borgne 52 dans lequel est engagée la partie avant de la tige de poussée 26, une pièce intermédiaire ou entretoise 54 de forme cylindrique tubulaire traversée avec jeu par la partie médiane de la tige de poussée 26, et une pièce de butée inférieure 56 comportant un passage cylindrique axial 58 de réception et de centrage de la partie arrière de la tige de poussée 26, ce passage axial 58 comprenant un épaulement 60 sur lequel la face d'extrémité arrière de la tige de poussée 26 vient axialement en appui.

L'ensemble 50, 54, 56 contenant la tige de poussée 26 est placé par exemple sur une presse hydraulique qui permet d'exercer sur ces pièces une poussée axiale suffisante pour réduire la longueur de la tige 26 à la valeur souhaitée L3, pour laquelle les pièces 50, 54 et 56 sont en appui les unes sur les autres. Eventuellement, des rondelles d'épaisseur calibrée sont ajoutées à l'entretoise 54.

La partie de la tige de poussée 26 qui est déformée plastiquement pour l'obtention de la longueur L3 peut être soit sa partie avant, soit sa partie médiane, soit sa partie arrière, comme représenté schématiquement aux figures 3 à 8.

Lorsque l'extrémité arrière de la tige de poussée 26 comporte un orifice axial borgne pour son emmanchement à force sur un téton axial de la cuvette 32 comme représenté en figure 1, on peut monter une pièce mâle 62 dans cet orifice borgne comme représenté en figure 2 pour éviter sa déformation lors de la compression axiale de la tige de poussée.

Dans la forme de réalisation représentée en figure 3, la cuvette 32 comporte une queue cylindrique axiale 64 dirigée vers l'avant et comportant à son extrémité avant un passage cylindrique borgne 66. La tige de poussée 26 comporte à sa partie arrière une jupe cylindrique 68 d'appui sur l'extrémité avant de la queue cylindrique 64 de la cuvette 32, cette jupe cylindrique 68 constituant la partie déformable en compression axiale de la tige de poussée, et une queue cylindrique axiale 70 s'étendant vers l'arrière pour l'emmanchement de la tige de poussée 26 dans le trou 66 de la queue cylindrique 64 de la cuvette 32.

Dans la forme de réalisation de la figure 4, la tige de poussée 26 comporte une jupe cylindrique arrière 72 au moyen de laquelle elle est emmanchée sur un téton axial 74 de la cuvette 32. La partie arrière de la jupe cylindrique 72 est à paroi amincie et forme la zone de déformation préférentielle de la tige de poussée 26 en compression axiale.

Dans la forme de réalisation des figures 5 et 6, c'est la partie médiane 78 de la tige de poussée 26 qui a un diamètre externe inférieur à celui du reste de la tige de poussée et qui constitue la zone de déformation préférentielle en compression axiale. En figure 5, l'extrémité arrière de la tige de poussée 26 comporte un passage axial cylindrique borgne 80 de montage par emmanchement sur un téton cylindrique axial 82 de la cuvette 32. En figure 6, l'extrémité arrière de la cuvette 26 est cylindrique pleine et est emmanchée à force dans un manchon tubulaire axial 84 de la cuvette 32.

En figure 7, la partie de déformation préférentielle de la tige de poussée 26 est un manchon 86 qui est rapporté sur une queue cylindrique axiale 88 de la tige permettant son montage par emmanchement à force dans un passage cylindrique borgne 90 d'une queue cylindrique axiale 92 de la cuvette 32.

Dans la forme de réalisation de la figure 8, c'est la partie avant 94 de la tige de poussée 26 qui a un diamètre extérieur inférieur à celui de sa partie arrière 96 de montage sur une queue cylindrique axiale 98 de la cuvette 32 et qui constitue la partie préférentiellement déformable en compression axiale de la tige de poussée.

D'autres configurations peuvent bien entendu être données à la tige de poussée 26 par l'homme du métier, dès lors qu'elles permettent une diminution précise de sa longueur par compression axiale.

## Revendications

1. Procédé de réglage de la course morte d'un ensemble maître-cylindre et servomoteur d'assistance pneumatique d'un dispositif de freinage, en particulier pour véhicule automobile, dans lequel le piston (20) du servomoteur est relié par une tige de poussée (26) à un piston (28) du maître-cylindre (30), **caractérisé en ce qu'**il consiste à modifier la longueur de la tige de poussée (26) par déformation plastique d'une partie au moins de cette tige, cette déformation étant obtenue par compression axiale de la tige de poussée et à mesurer une distance axiale (L2) entre le piston (20) du servomoteur en position de repos et une partie prédéterminée de l'enveloppe (12) du servomoteur, à soustraire de cette distance une autre distance axiale (L1) fonction de la course morte désirée, et à comprimer axialement la tige de poussée jusqu'à ce que sa longueur axiale (L3) soit égale au résultat de la soustraction précitée.

2. Procédé selon la revendication 1, **caractérisé en ce que** les extrémités de la tige de poussée (26) sont reçues et guidées dans des passages cylindriques (52, 58) de pièces de butée (50, 56).

3. Procédé selon la revendication 2, **caractérisé en ce qu'**une entretoise tubulaire (54) traversée axialement avec jeu par la tige de poussée (26) est interposée entre les pièces de butée (50, 56).

4. Procédé selon la revendication 3, **caractérisé en ce qu'**il consiste à déterminer la longueur axiale de l'entretoise (54) en fonction de la longueur désirée (L3) de la tige de poussée (26) et à comprimer axialement la tige de poussée jusqu'à ce que l'entretoise (54) soit serrée entre les pièces de butée (50, 56).

5. Procédé selon la revendication 4, **caractérisé en ce qu'**il consiste à ajuster la longueur axiale de l'entretoise (54) par addition de rondelles d'épaisseurs différentes.

6. Procédé selon l'une des revendications précédentes, **caractérisé en ce que** la première distance axiale (L2) est mesurée entre une cuvette (32) de logement d'un disque de réaction (34) monté à l'extrémité du piston (20) du servomoteur et la face radiale externe (46) de l'enveloppe du servomoteur, du côté du maître-cylindre (30).

7. Procédé selon l'une des revendications précédentes, **caractérisé en ce qu'**il consiste à prévoir dans la tige de poussée une partie (68, 76, 78, 86, 94) ayant des caractéristiques de forme et/ou de matière facilitant sa déformation plastique en compression axiale.

8. Dispositif pour l'exécution du procédé décrit dans l'une des revendications précédentes, **caractérisé en ce qu'**il comprend des pièces de butée (50, 56) comportant des passages cylindriques (52, 58) dans lesquels sont engagés les extrémités de la tige de poussée (26), et des moyens de compression, du type hydraulique par exemple, recevant les pièces de butée (50, 56) pour les pousser axialement l'une vers l'autre et **en ce qu'**il comprend une entretoise tubulaire (54) interposée entre les pièces de butée (50, 56) et destinée à être traversée axialement avec jeu par la tige de poussée (26), la longueur axiale de l'entretoise étant déterminée en fonction de la longueur axiale (L3) à donner à la tige de poussée.

9. Dispositif selon la revendication **8**, **caractérisé en ce qu'**il comprend des rondelles d'épaisseurs différentes, destinées à être ajoutées axialement à l'entretoise (54) pour ajuster sa longueur.

10. Ensemble maître-cylindre et servomoteur d'assistance pneumatique d'un dispositif de freinage, en particulier pour véhicule automobile, **caractérisé en ce qu'**il comprend une tige de poussée (26) dont la longueur axiale (L3) a été ajustée par exécution du procédé décrit dans l'une des revendications 1 à 7 ou au moyen du dispositif décrit dans l'une des revendications 8 à **9**.

11. Ensemble selon la revendication **10**, **caractérisé en ce que** la tige de poussée (26) est montée par emmanchement à force sur une cuvette (32) de logement d'un disque de réaction (34) du servomoteur.

## Claims

1. Method for adjusting the free travel of a master-cylinder and pneumatic booster assembly for a braking device, in particular for a motor vehicle, in which the piston (20) of the booster is connected by a push-rod (26) to a piston (28) of the master cylinder (30), **characterized in that** it consists in modifying the length of the push-rod (26) by plastic deformation of a portion at least of this rod, this deformation being obtained by axial compression of the push-rod and in measuring an axial distance (L2) between the piston (20) of the booster in the rest position and a predetermined portion of the casing (12) of the booster, in subtracting from this distance another axial distance (L1) that is a function of the desired free travel, and in axially compressing the push-rod until its axial length (L3) is equal to the result of the aforementioned subtraction.

2. Method according to Claim 1, **characterized in that** the ends of the push-rod (26) are received and guided in cylindrical passageways (52, 58) of abutment parts (50, 56).

3. Method according to Claim 2, **characterized in that** a tubular spacer (54) traversed axially with clearance by the push-rod (26) is interposed between the abutment parts (50, 56).

4. Method according to Claim 3, **characterized in that** it consists in determining the axial length of the spacer (54) as a function of the desired length (L3) of the push-rod (26) and in axially compressing the push-rod until the spacer (54) is clamped between the abutment parts (50, 56).

5. Method according to Claim 4, **characterized in that** it consists in adjusting the axial length of the spacer (54) by addition of shims of different thicknesses.

6. Method according to one of the preceding claims, **characterized in that** the first axial distance (L2) is measured between a dish (32) for housing a reaction disc (34) mounted at the end of the piston (20) of the booster and the outer radial face (46) of the casing of the booster, on the side of the master cylinder (30).

7. Method according to one of the preceding claims, **characterized in that** it consists in providing, in the push-rod, a portion (68, 76, 78, 86, 94) having characteristics of shape and/or of material making its plastic deformation easier in axial compression.

8. Device for carrying out the method described in one of the preceding claims, **characterized in that** it comprises abutment parts (50, 56) comprising cylindrical passageways (52, 58) in which the ends of the push-rod (26) are engaged, and compression means, of the hydraulic type for example, receiving the abutment parts (50, 56) in order to push them axially towards one another and **in that** it comprises a tubular spacer (54) interposed between the abutment parts (50, 56) and designed to be traversed axially with clearance by the push-rod (26), the axial length of the spacer being determined as a function of the axial length (L3) to be given to the push-rod.

9. Device according to Claim 8, **characterized in that** it comprises shims of different thicknesses, designed to be added axially to the spacer (54) in order to adjust its length.

10. Master-cylinder and pneumatic booster assembly for a braking device, in particular for a motor vehicle, **characterized in that** it comprises a push-rod (26) of which the axial length (L3) has been adjusted by carrying out the method described in one of Claims 1 to 7 or by means of the device described in one of Claims 8 to 9.

11. Assembly according to Claim 10, **characterized in that** the push-rod (26) is mounted by forced sleeve-fitting onto a dish (32) for housing a reaction disc (34) of the booster.

## Patentansprüche

1. Verfahren zur Einstellung des Leerwegs einer Einheit aus Hauptzylinder und pneumatischem Bremshilfe-Servomotor einer Bremsvorrichtung, insbesondere für ein Kraftfahrzeug, bei dem der Kolben (20) des Servomotors durch eine Schubstange (26) mit einem Kolben (28) des Hauptzylinders (30) verbunden ist, **dadurch gekennzeichnet, dass** es darin besteht, die Länge der Schubstange (26) durch plastische Verformung mindestens eines Teils dieser Stange zu verändern, wobei diese Verformung durch axiale Komprimierung der Schubstange erhalten wird, und einen axialen Abstand (L2) zwischen dem Kolben (20) des Servomotors in der Ruhestellung und einem vorbestimmten Bereich der Hülle (12) des Servomotors zu messen, von diesem Abstand einen andern axialen Abstand (L1) zu subtrahieren, der vom gewünschten Leerweg abhängt, und die Schubstange axial zu komprimieren, bis ihre axiale Länge (L3) gleich dem Ergebnis der erwähnten Subtraktion ist.

2. Verfahren nach Anspruch 1, **dadurch gekennzeichnet, dass** die Enden der Schubstange (26) in zylindrischen Durchgängen (52, 58) von Anschlagbauteilen (50, 56) aufgenommen und geführt werden.

3. Verfahren nach Anspruch 2, **dadurch gekennzeichnet, dass** ein rohrförmiger Abstandshalter (54), der axial mit Spiel von der Schubstange (26) durchquert wird, zwischen die Anschlagbauteile (50, 56) eingefügt ist.

4. Verfahren nach Anspruch 3, **dadurch gekennzeichnet, dass** es darin besteht, die axiale Länge des Abstandshalters (54) abhängig von der gewünschten Länge (L3) der Schubstange (26) zu bestimmen und die Schubstange axial zu komprimieren, bis der Abstandshalter (54) zwischen den Anschlagbauteilen (50, 56) eingespannt ist.

5. Verfahren nach Anspruch 4, **dadurch gekennzeichnet, dass** es darin besteht, die axiale Länge des Abstandshalters (54) durch Hinzufügung von Unterlegscheiben verschiedener Dicken anzupassen.

6. Verfahren nach einem der vorhergehenden Ansprüche, **dadurch gekennzeichnet, dass** der erste axiale Abstand (L2) zwischen einer Aufnahmeschale (32) einer Reaktionsscheibe (34), die am Ende des Kolbens (20) des Servomotors montiert ist, und der radial äußeren Seite (46) der Hülle des Servomotors auf der Seite des Hauptzylinders (30) gemessen wird.

7. Verfahren nach einem der vorhergehenden Ansprüche, **dadurch gekennzeichnet, dass** es darin besteht, in der Schubstange einen Bereich (68, 76, 78, 86, 94) vorzusehen, der Form- und/oder Materialeigenschaften hat, die seine plastische Verformung durch axiale Komprimierung erleichtern.

8. Vorrichtung zur Ausführung des in einem der vorhergehenden Ansprüche beschriebenen Verfahrens, **dadurch gekennzeichnet, dass** sie Anschlagbauteile (50, 56), die zylindrische Durchgänge (52, 58) aufweisen, in die die Enden der Schubstange (26) eingeführt sind, und Komprimierungseinrichtungen, zum Beispiel vom hydraulischen Typ, enthält, die die Anschlagbauteile (50, 56) aufnehmen, um sie axial zueinander zu drücken, und dass sie einen rohrförmigen Abstandshalter (54) enthält, der zwischen die Anschlagbauteile (50, 56) eingefügt und dazu bestimmt ist, axial mit Spiel von der Schubstange (26) durchquert zu werden, wobei die axiale Länge des Abstandshalters abhängig von der axialen Länge (L3) bestimmt wird, die der Schubstange verliehen werden soll.

9. Vorrichtung nach Anspruch 8, **dadurch gekennzeichnet, dass** sie Unterlegscheiben verschiedener Dicken enthält, die dazu bestimmt sind, axial zum Abstandshalter (54) hinzugefügt zu werden, um seine Länge anzupassen.

10. Einheit aus Hauptzylinder und pneumatischem Hilfsservomotor einer Bremsvorrichtung, insbesondere für ein Kraftfahrzeug, **dadurch gekennzeichnet, dass** sie eine Schubstange (26) enthält, deren axiale Länge (L3) durch Ausführung des in einem der Ansprüche 1 bis 7 beschriebenen Verfahrens oder mittels der in einem der Ansprüche 8 bis 9 beschriebenen Vorrichtung angepasst wurde.

11. Einheit nach Anspruch 10, **dadurch gekennzeichnet, dass** die Schubstange (26) durch Aufpressen auf eine Aufnahmeschale (32) einer Reaktionsscheibe (34) des Servomotors montiert wird.
